# EUROPEAN PATENT APPLICATION

(11) **EP 2 639 718 A1**
(43) Date of publication of application: **18.09.2013**
(21) Application number: 13158502.8
(22) Date of filing: 11.03.2013
(51) Int. Cl.: G06F 17/30

(54) **Method and apparatus for tagging contents in a portable electronic device**

(30) Priority: 13.03.2012 KR 20120025454
(71) Applicant: Samsung Electronics Co., Ltd, Gyeonggi-do 443-742 (KR)
(72) Inventor: Kwak, Hyun-Mi, Gyeonggi-do (KR); Song, Moon-Bae, Seoul (KR)
(74) Representative: Gover, Richard Paul

(57) **Abstract**

A content tagging method of an electronic device includes requesting for content tagging, determining at least one or more of an association type, a contents identifier, a place identifier, and a current time according to the content tagging request, and creating a place tag including the determined at least one or more of the association type, the contents identifier, the place identifier, and the current time The method can give semantic location information, which is recognized and sorted by a user, to contents and can utilize the semantic location information for contents management.

## Description

### BACKGROUND OF THE INVENTION

### 1. Field of the Invention

The present invention relates to a method and apparatus for tagging contents in a portable electronic device. More particularly, the present invention relates to a method and apparatus for tagging contents using a semantic location.

### 2. Description of the Related Art

Owing to the popularization of digital devices and the growth of the wireless network environment, it has become common to create, share, and consume various kinds of contents through mobile devices. The mobile devices can tag contents with metadata or supplementary information to manage the contents or provide an application service.

Content tagging technology in the prior art using location information can be exemplified as geotagging. A typical service example is a technology for tagging pictures with a latitude/longitude value of a location where the pictures are taken.

In addition to a primary function of tagging with a latitude/longitude value, there is a technology in the prior art of searching around a specific location expressed as a longitude/latitude and utilizing a Point Of Interest (POI) being a named location for content tagging. The POI is data indicating main facilities, which are expressed as coordinates and the like, such as stations, airports, terminals, hotels, department stores and the like, together with geographic information, on an electronic map. The POI may also be called a landmark.

On the other hand, the purpose of location tagging is to recognize and utilize content creation location information and further, a user's location environment. But, a geotag according to the technology of the prior art includes fragmented location information. Specifically, the geotag using a latitude and longitude value contains only physical location information in a numeral code form, and cannot provide a user with a semantic location or a personalized location, e.g., location information such as 'house', 'office', and 'car' changeable depending on a user. In addition, because the geotag has to necessarily use a map service to provide a service based on latitude/longitude tag information, an application scenario using a tag necessarily becomes narrow or limited in use and advantages. According to the location tagging technology using the POI in the prior art to solve the limitations of the location tagging using latitude/longitude, contents are tagged with a general POI (e.g., address, "Woonam apartment", "Mcdonald", etc.) within a search area. However, when tagging with latitude/longitude, the address or the general POI (e.g., "Woonam apartment", "Mcdonald") to the contents, it is desirable to use a semantic location from each user's perspective rather than an objective location so that the user can more intuitively recognize or apply the contents.

Accordingly, there is a need for a method and apparatus for content tagging based on a semantic location from a user's perspective.

### SUMMARY OF THE INVENTION

An aspect of the present invention is to substantially solve at least the above problems and/or disadvantages and to provide at least the advantages below. Accordingly, one aspect of the present invention is to provide a method and apparatus for, by tagging a semantic location to contents, combining contents management with information of a user's perspective that the semantic location has and the merits of fixed/mobile location non-distinction and thus, being capable of providing a location-based personalized application service using the semantic location and its type.

The above aspects are achieved by providing a method and apparatus for tagging contents in a portable electronic device.

According to one aspect of the present invention, a content tagging method of an electronic device is provided. The method includes displaying at least one or more semantic locations, selecting one of the at least one or more semantic locations, and, based on the selected semantic location, creating a place tag related to a corresponding content.

According to another aspect of the present invention, a content tagging using a method of an electronic device is provided. The method includes searching a place tag DataBase (DB) and displaying at least one or more semantic locations, selecting one of the at least one or more semantic locations, and displaying at least one or more contents related to the selected semantic location.

According to a further aspect of the present invention, a content tagging method of an electronic device is provided. The method includes recognizing a semantic location of a user's perspective corresponding to a current place, and displaying at least one or more contents related to the semantic location corresponding to the current place.

According to yet another aspect of the present invention, a content tagging method of an electronic device is provided. The method includes requesting for content tagging, determining at least one or more of an association type, a contents identifier, a place identifier, and a current time according to the content tagging request, and creating a place tag including the determined at least one or more of the association type, the contents identifier, the place identifier, and the current time.

According to still another aspect of the present invention, an electronic device includes one or more processors for executing computer programs, a memory for storing data and instructions, and one or more programs stored in the memory and configured to be executed by the one or more processors. The program includes a command for: displaying at least one or more semantic locations; selecting one of the at least one or more semantic locations; and creating a place tag related to a corresponding content, based on the selected semantic location.

According to still another aspect of the present invention, an electronic device includes one or more processors for executing computer programs, a memory for storing data and instructions, and one or more programs stored in the memory and configured to be executed by the one or more processors. The program includes a command for: searching a place tag DataBase (DB) and displaying at least one or more semantic locations; selecting one of the at least one or more semantic locations; and displaying at least one or more contents related to the selected semantic location.

According to still another aspect of the present invention, an electronic device includes one or more processors for executing computer programs, a memory for storing data and instructions, and one or more programs stored in the memory and configured to be executed by the one or more processors. The program includes a command for: recognizing a semantic location corresponding to a current place; and displaying at least one or more contents related to the semantic location corresponding to the current place.

According to still another aspect of the present invention, an electronic device includes one or more processors for executing computer programs, a memory for storing data and instructions, and one or more programs stored in the memory and configured to be executed by the one or more processors. The program includes a command for: requesting for content tagging; determining at least one or more of an association type, a contents identifier, a place identifier, and a current time, according to the content tagging request; and creating a place tag including the determined at least one or more of the association type, the contents identifier, the place identifier, and the current time.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a construction of a portable electronic device according to an exemplary embodiment of the present invention;
FIG. 2 is a flowchart illustrating a procedure for realizing automatic semantic location tagging according to the exemplary embodiment of the present invention;
FIG. 3 is a flowchart illustrating a procedure for realizing manual semantic location tagging according to the exemplary embodiment of the present invention;
FIGS. 4A to 4C illustrate an example of designating a specific semantic location and a specific association type and requesting for tagging according to the exemplary embodiment of the present invention;
FIG. 5 illustrates an example of creating a place tag DataBase (DB) according to task content according to the exemplary embodiment of the present invention;
FIGS. 6A to 6C illustrate an example of searching contents using a keyword that is a semantic location according to the exemplary embodiment of the present invention;
FIG. 7 illustrates a scenario of requesting automatic tagging according to the exemplary embodiment of the present invention; and
FIGS. 8A to 8C illustrate a scenario of a location-based contents recommendation service based on user information according to the exemplary embodiment of the present invention.

### DETAILED DESCRIPTION OF THE INVENTION

Preferred embodiments of the present invention will be described herein below with reference to the accompanying drawings. In the following description, well-known functions or constructions are not described in detail since they would obscure the invention in unnecessary detail. In addition, terms described below, which are defined considering functions in the present invention, can be different depending on user and operator's intention or practice. Therefore, the terms should be defined on the basis of the disclosure throughout this specification. The present invention may, however, be embodied in many different forms and should not be construed as limited to the exemplary embodiments set forth herein. The principles and features of this invention may be employed in varied and numerous embodiments without departing from the scope of the invention.

The same reference numbers are used throughout the drawings to refer to the same or like parts. Furthermore, although the drawings represent exemplary embodiments of the invention, the drawings are not necessarily to scale and certain features may be exaggerated or omitted in order to more clearly illustrate and explain the present invention.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among terms set forth herein, data refers to any kind of information processed by the device, including text and/or images received from any external entities, messages transmitted or received, and information created when a specific function is executed by the device.

A method and apparatus for tagging contents in a portable electronic device according to the present invention are described below. In particular, the present invention is to provide a fixed or mobile place environment from a user's perspective to contents by using a semantic location as a place tag.

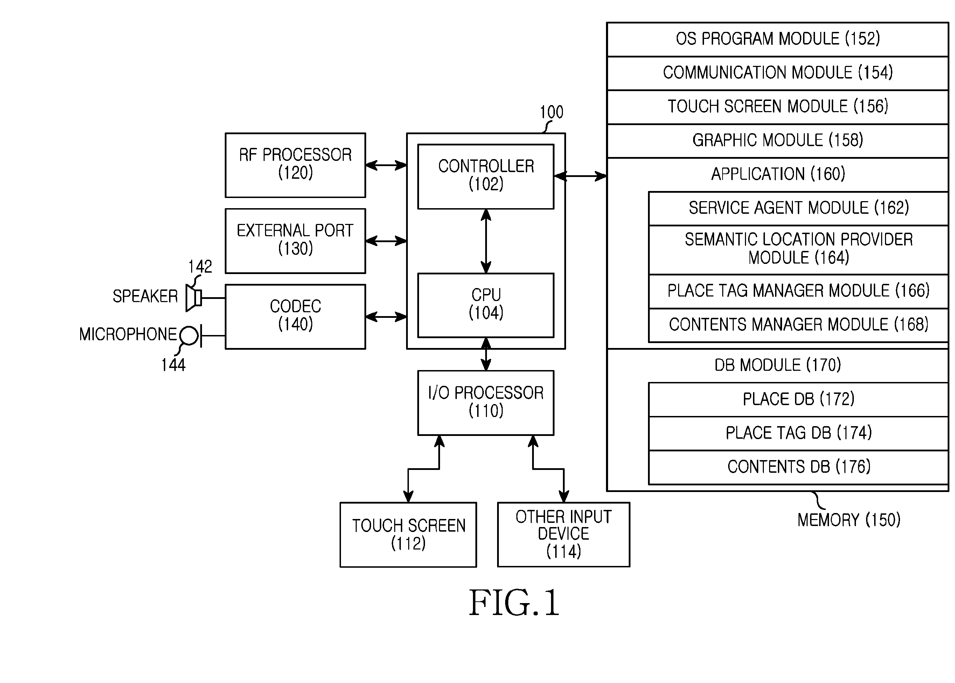

FIG. 1 illustrates a construction of a portable electronic device according to an exemplary embodiment of the present invention.

Referring to FIG. 1, the portable electronic device according to the present invention refers to a device such as a portable terminal, a mobile phone, a mobile pad, a media player, a tablet computer, a handheld computer, a Personal Digital Assistant (PDA), or any other known electronic devices which may be portable. In addition, the portable electronic device may be any portable electronic device including a device having a combination of two or more functions among these devices.

The portable electronic device includes a memory 150, a Central Processing Unit (CPU) 104, a controller 102, a Radio Frequency (RF) processor 120, an external port 130, a COding DECoding (CODEC) unit 140 which may be implemented on an Integrated Circuit (IC), a speaker 142, a microphone 144, an Input/Output (I/O) processor 110, a touch screen 112, and an input device 114 with may be any known type of input device in addition to and/or other than a touch screen. The memory 150 and the external port 130 can be plural in number. The CPU 104 and the controller 102 can be realized as a single control unit 100, for example, implemented on a single computer chip, processor, microprocessor, motherboard, or other electronic units.

Also, each of these constituent elements may communicate with one another through one or more communication buses or signal lines in a manner known in the art.

These constituent elements can realize functions by hardware, such as one or more integrated circuits, or software. Also, these constituent elements can be realized in a combination of hardware and software.

The portable electronic device illustrated in FIG. 1 is merely one example, and can have more constituent elements than illustrated herein, or can have fewer constituent elements, provided that such alternative embodiments having fewer constituent elements operate and perform all of the functions of the present invention, as described herein. Alternatively, the portable electronic device can be configured in different embodiments other than illustrated herein.

Each of the constituent elements is described in greater detail below.

The memory 150 can be configured to include a Random Access Memory (RAM), a nonvolatile memory including a flash memory, a Read Only Memory (ROM), an Electrically Erasable Programmable ROM (EEPROM), a magnetic disk storage device, a Compact Disk ROM (CD-ROM), a Digital Versatile Disk (DVD) or an optical storage device of other form, and a magnetic cassette, or a combination of some or all of such memory devices. Also, each type of memory device included in the memory 150 may be plural in number.

Also, the portable electronic device can further include, as a memory, a storage device capable of being accessed through a communication network such as the Internet, an Intranet, a Local Area Network (LAN), a Wide LAN (WLAN), and a Storage Area Network (SAN), or any communication network configured in combination of these communication networks and other communication networks known in the art. The memory device 150 can access the portable electronic device through the external port 130. Also, a separate memory device on the communication network may access the portable electronic device through the RF processor 120.

The memory 150 stores software having at least one software constituent element which includes an Operating System (OS) program module 152, a communication software module 154, a touch screen software module 156, a graphic software module 158, one or more application software 160, and a DataBase (DB) module 170. Here, a software module may also be expressed as an instruction set or any other known type of software or software module known in the art.

The OS program module 152 may include, e.g., a built-in operating system such as WINDOWS commercially available from MICROSOFT CORPORATION, LINUX, Darwin, RTXC, UNIX, OS X commercially available from APPLE CORPORATION, or VxWorks, and includes various software constituent elements controlling general system operation. Control of the general system operation represents, for example, memory management and control, storage hardware or device control and management, power control and management and the like. The OS program module 152 performs other known functions for facilitating communication between various hardware and software constituent elements.

The communication software module 154 includes various software constituent elements for processing data transmitted and received through the RF processor 120 and/or the external port 130.

The touch screen software module 156 includes various software constituent elements for performing various operations associated with a touch on the touch screen 112, for example, a determination as to a touch or non-touch, a determination as to tracking or non-tracking of a movement of a touch and a movement crossing on the touch screen 112, and a determination as to a touch stop or non-stop when a touch is interrupted. The determination as to the movement of the touch point can include determining a speed (i.e., its magnitude) of the touch point, a velocity (i.e., its magnitude and direction), and/or acceleration (i.e., its magnitude and direction).

The graphic software module 158 includes various software constituent elements for providing and displaying a graphic on the touch screen 112. The term 'graphic' includes text, a web page, an icon, a digital image, a video, an animation and the like.

The application software 160 includes a browser, an electronic mail (e-mail) application, an instant message application, word processing, keyboard emulation, an address book, a touch list, a widget, a cross-platform computing application known as JAVA commercially available from ORACLE CORPORATION, coding, Digital Right Management (DRM), voice recognition, voice copy, a location determining function, a location-based service, a music player and the like.

In accordance with the present invention, in order to tag contents with semantic location information, the application software 160 includes a service agent module 162, a semantic location provider module 164, a place tag manager module 166, and a contents manager module 168. For another example, the service agent module 162, the semantic location provider module 164, the place tag manager module 166, and the contents manager module 168 can be realized as a single application software included in the application software 160.

The contents manager module 168 associates and manages a unique identifier for each of various types of contents creatable and accessible in the portable electronic device.

For example, the contents can be a video, an image, and/or a voice created through a module such as a camera module. For another example, the contents can be multimedia data such as video, image, and/or audio data provided through the external port 130. For further example, the contents can be a DB file created by execution of the application software 160.

The place tag manager module 166 manages an association between a content identifier (ContentId) and a semantic location. The semantic location is expressed by the semantic location provider module 164 as a semantic location identifier (PlaceId) provided from a place DB 172.

By associating a current semantic location or a specific semantic location with a specific content, the place tag manager module 166 performs semantic location tagging for the content. The association between the semantic location and the contents has an association type (AssocType) and a tagging time (Timestamp) type. The association type may include one or more of, for example, a. created, b. accessed, and c. designated. One semantic location tag is expressed as a content identifier (ContentId), a place identifier (PlaceId), an association type (AssocType), and a tagging time (Timestamp), and is stored in a place tag DB 174.

The semantic location provider module 164 creates, updates, and/or deletes semantic location information defined by a user. That is, the semantic location provider module 164 recognizes a place environment using various network protocols and registers the place environment as a place being a semantic location, or provides location information matching the place environment. The semantic location information is stored and/or managed in the place DB 172. The semantic location information is information explicitly registered and classified by the user. Because the semantic location provider module 164 recognizes the place environment using the various network protocols, it is possible to perform location registration in an indoor, outdoor, and/or mobile environment. The semantic location information can be created through various known techniques, and is not limited to the examples described herein in the present invention.

In the implementation of the exemplary embodiment of the present invention, the semantic location information provided by the semantic location provider module 164 according to the present invention may be configured so that the semantic location provider module 164 does not provide exact geographic information such as latitude/longitude coordinates and addresses, and exact coordinates are not stored in a place tag. Therefore, the present invention provides a security strong point in that the user's location information is not disclosed through the contents which may be accessible by others.

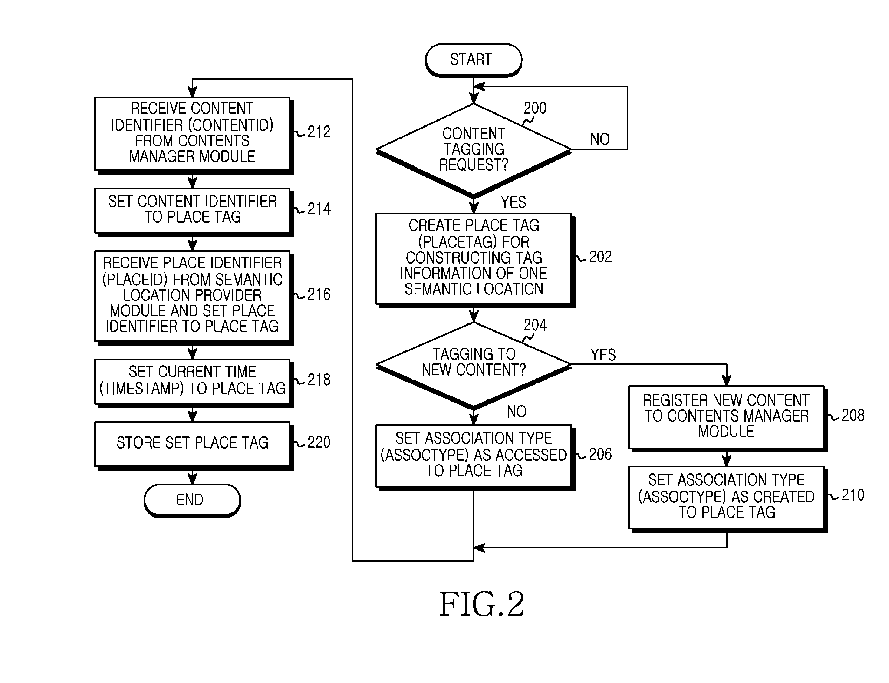

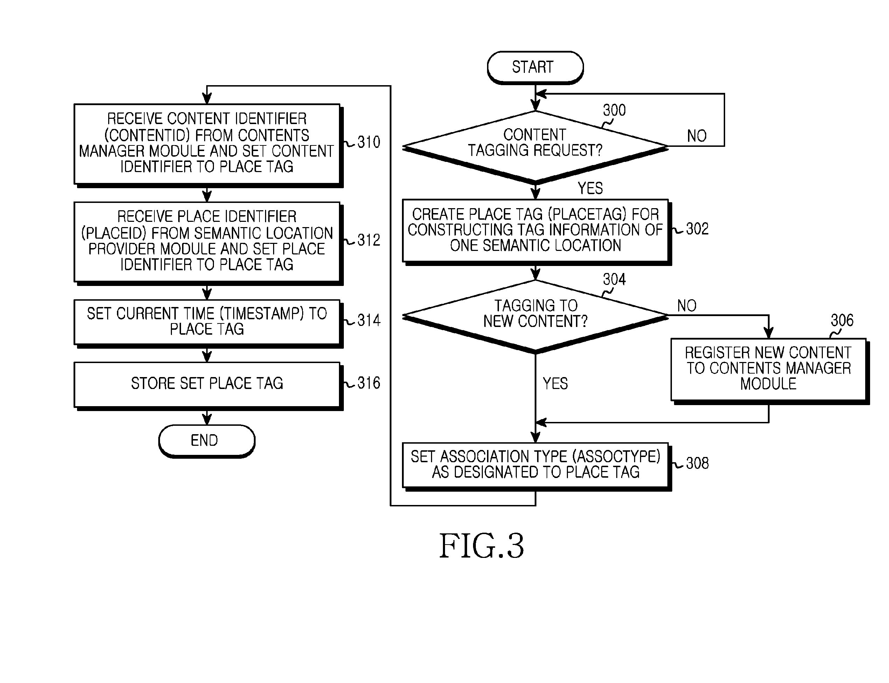

The service agent module 162 performs semantic location tagging according to the present invention. For example, the service agent module 162 receives a request of a user or a location-aware application, and tags a corresponding content with a semantic location in cooperation with the semantic location provider module 164, the place tag manager module 166, and the contents manager module 168. In addition, the service agent module 162 analyzes tagged data and provides location-based personalization information to an application service. An example technology of tagging the corresponding contents with the semantic location is described below in greater detail with reference to FIGS. 2 and 3.

The DB module 170 stores various data. For instance, a contents DB 176 includes a unique identifier (ContentId), a content type (ContentType), and an access path (ContentLocation). The content type (ContentType) can include one or more of, for example, a. a picture, b. music, c. an image, d. a play list, e. a memo, f. a schedule, g. an application, h. a call history, i. a message history, and the like.

The place tag DB 174 stores semantic location tag information when the service agent module 162 tags a semantic location to a corresponding content.

The place DB 172 stores predefined place-related information, and location information, hereinafter, referred to as "semantic location information", which is defined from a user's perspective, for example, the perspective of the current user of the portable electronic device implementing the present invention.

When other constituent elements such as the CPU 104 access the memory 150, the controller 102 performs control of such access.

The external port 130 may implement a Universal Serial Bus (USB) or a serial bus interface commercially available and complying with the IEEE 1394 interface standard and/or the FIREWIRE interface commercially available from APPLE CORPORATION, and the like, for example, although not being limited to these example interfaces. The external port 130 is used for connecting directly to other devices or connecting indirectly to other devices through a network, e.g., the Internet, an intranet, a WLAN and the like.

Also, the CPU 104 connects the I/O processor 110 of the portable electronic device to the memory 150 under the control of the controller 102. The portable electronic device can include a plurality of processors. The processors perform various functions of the portable electronic device using various software programs and also perform processing and control for voice communication and data communication. In addition to such general functions, the processors play a role in executing a specific software module, for example, an instruction set, stored in the memory 150 and performing various specific functions corresponding to the software module.

The RF processor 120 causes the portable electronic device to transmit and/or receive electromagnetic waves in a manner known in the art. The RF processor 120 converts a baseband signal into electromagnetic waves and transmits the electromagnetic waves through an antenna which may be included in or connected to the RF processor 120. Alternatively or in addition, the RF processor 120 converts electromagnetic waves received through the antenna into a baseband signal. The RF processor 120 may include, for example, one or more of an RF transceiver, an amplifier, a tuner, an oscillator, a digital signal processor, a CODEC chip set, a Subscriber Identity Module (SIM) card and the like.

The RF processor 120 communicates with a communication network and other communication devices through electromagnetic waves. For example, the RF processor 120 communicates with a wireless network such as the Internet, an Intranet, a network, a cellular phone network, a WLAN, and/or Wireless Metropolitan Area Network (WMAN), and also, can communicate with other electronic devices known in the art by wired and/or wireless communication.

The wireless communication can include communication using Time Division Multiple Access (TDMA), Global System for Mobile Communication (GSM), Enhanced Data GSM Environment (EDGE), Code Division Multiple Access (CDMA), Wideband CDMA (W-CDMA), a short distance wireless communication protocol known as BLUETOOTH commercially available from the BLUETOOTH SPECIAL INTEREST GROUP, Voice over Internet Protocol (VoIP), wireless data exchange technology known as WIFI commercially available from the WI-FI ALLIANCE, Wi-MAX, e-mail, instant messaging, and Short Message Service (SMS) protocols or any combination of these various communication methods and other known communication methods.

The CODEC 140 communicates with a user through the speaker 142 and the microphone 144. That is, the CODEC 140 provides an audio interface between the user and the portable electronic device, together with the speaker 142 and the microphone 144. Under the control of the CPU 104, the CODEC 140 receives a data signal from a peripheral interface or other devices connected thereto, and converts the received data signal into an electric signal. The electric signal is forwarded to the speaker 142. The speaker 142 converts the electric signal into sound waves which may be audible sounds, and outputs the sound waves. Also, the microphone 144 converts sound waves, such as the voices of people or other sound sources, into an electric signal. The CODEC 140 receives the electric signal from the microphone 144. The CODEC 140 converts the received electric signal into an audio data signal, and transmits the converted audio data signal to the control unit 100 and/or to a peripheral interface. The audio data signal is transmitted to the memory 150 through the control unit 100 and/or through a peripheral interface or is transmitted to the RF processor 120. The CODEC 140 can include a jack for providing an interface with a detachable earphone, headphone, or headset or other known audio devices. In the example of a headset, output for a one-ear or two-ear headphone and input for a microphone are possible. The jack may also be called an earphone jack or a headset jack.

The I/O processor 110 provides an interface between an input/output device such as the touch screen 112 and the input device 114, and optionally a peripheral interface known in the art. The I/O processor 110 includes the touch screen 112 and the input device 114. The input device 114 can be plural in number, and transmits and/or receives an electric signal with other input devices, such as a keyboard, keypad, or mouse, or other known input devices. The input device 114 can include a button, a dial, a stick, a switch and the like. The button can use a push button, a rocker button and the like.

The touch screen 112 provides an I/O interface between the portable electronic device and the user. That is, the touch screen 112 forwards a user's touch input to the portable electronic device. In addition, the touch screen 112, displaying an output of the portable electronic device to the user, displays a visual output to the user. This visual output is represented in a form of text, a graphic, a video, and/or a combination of such visual outputs and any other known outputs.

The user inputs a touch through the touch screen 112 according to known methods of processing a haptic touch, a tactile touch, and/or a combination thereof. The touch screen 112 has a touch sensing surface for accepting a user input. For instance, a touch point between the touch screen 112 and the user corresponds to the digit of a finger used for a user touch. In addition, the user can touch the touch screen 112 using a suitable tool such as a stylus, a pen, and the like. If the user inputs a touch through the touch screen 112, the touch screen 112 detects the touch on the touch screen 112 in association with the I/O processor 110 and a software module, which may include an instruction set, associated with the I/O processor 110. The detected touch is converted into an interaction corresponding to a user interface subject, e.g., a soft key, displayed on the touch screen 112.

The touch screen 112 can use various display technologies, for example, a Liquid Crystal Display (LCD) technology, a Light Emitting Diode (LED) technology, a Light Emitting Polymer Display (LPD) or Organic Light Emitting Diode (OLED) technology, and other display technologies, although not limited to these example display technologies. The touch screen 112 and the I/O processor 110 can detect or sense the start of a touch, the movement of the touch, and/or the interruption or end of the touch using various touch detection or sensing technologies such as capacitive detection, resistive detection, infrared detection, and surface sound wave detection technologies. In the examples herein describing the present invention, a proximity sensor array technology or other technologies capable of determining a touch point on the touch screen 112 are available. Also, it is possible even to use a touch sensing tablet detecting only a touch input instead of displaying a visual output.

In addition, the portable electronic device can include a touch pad, which may be included in the touch screen 112, for activating or deactivating a specific function, or alternatively the touch pad may be a device separate from the touch screen 112. Unlike the touch screen 112, the touch pad may sense only a touch input instead of displaying a visual output. The touch pad can have a separate touch sensing surface isolated from the touch screen 112, or can be formed in an extension part of a touch sensing surface formed by the touch screen 112.

A touch on the touch screen 112 causes the touch screen 112 to generate corresponding electric signals, which are detected by the I/O processor 110 and the touch screen software module 156. The I/O processor 110 transmits/receives the electric signals from the touch screen 112. A touch sensing software is stored as a touch sensing software module in the memory 150, and may be included in the touch screen software module 156. The touch screen software module 156 includes various software configurations for judging various operations related to a touch of the touch screen 112. These software configurations perform a judgment on a touch or non-touch on the touch screen 112, a judgment on a movement of a touch, a judgment on the movement direction and movement time of the touch, a judgment on a touch stop or non-stop, and the like. The judgment on the movement of the touch can include determining a velocity (including magnitude and/or direction) of the touch and/or an acceleration (including magnitude and/or direction) thereof.

In addition, the portable electronic device can also perform input processing according to a user's motion on the touch screen 112. The user input by motion on the touch screen 112 causes the touch screen 112 to generate corresponding electric signals which are detected by the I/O processor 110 and the touch screen software module 156. The I/O processor 110 transmits/receives the electric signal from the touch screen 112. The touch screen software module 156 includes various software configurations for judging a motion related to motion detection on the touch screen 112. These software configurations perform a judgment on the start of a motion on the touch screen 112, a judgment on the nature of the motion, a judgment on the movement direction and movement time of the motion, a judgment on a motion stop or non-stop, and the like. The judgment on the movement direction and movement time of the motion can include determining a velocity (including magnitude and/or direction) of the motion or/and acceleration (including magnitude and/or direction) thereof.

Furthermore, the portable electronic device includes a power system supplying power to various constituent elements included in the portable electronic device. The power system can include a power source, for example, an alternating current source or a battery, a power error detection circuit, a power converter, a power inverter, and a charging device and/or a power level display device, for example, a light emitting diode. In addition, the power system can include a power management and control device for performing any of the functions of power generation, management, and distribution.

In addition, the portable electronic device can realize various functions of the touch screen 112 by a separate touch pad. This function can use a physical input and/or control device, for example, a dial or a button. The physical input and/or control device can be a push button for turning on/off and locking the portable electronic device, a volume adjusting rocker button, a ringer profile, a toggling slider switch and the like. Furthermore, the portable electronic device can include a function for processing a voice input for activating or deactivating a predefined function through the microphone 144.

FIG. 2 is a flowchart illustrating a procedure for realizing automatic semantic location tagging according to the exemplary embodiment of the present invention.

Referring to FIGS. 1-2, in step 200, the service agent module 162 judges if a content tagging request is generated automatically by a system. If no request is detected, the method loops back to step 200.

Otherwise, with a request detected, in step 202, the service agent module 162 creates a place tag (PlaceTag) for constructing tag information of one semantic location.

Next, in step 204, the service agent module 162 judges if the service agent module 162 is tagging new content.

If the service agent module 162 judges in step 204 not to be tagging new content, the service agent module 162 proceeds to step 206 and sets an association type (AssocType) as an Accessed type to the place tag (PlaceTag) based on content tagging request information. The method then proceeds to step 212.

However, if the service agent 162 judges in step 204 to be tagging new content, the service agent module 162 proceeds to step 208 and registers the new content with the contents manager module 168. Next, in step 210, the service agent module 162 sets the association type as a Created type to the place tag (PlaceTag) based on the content tagging request information, and the method proceeds to step 212.

That is, in case of an automatic tagging request, the service agent module 162 sets the association type as the Created type for initially created contents in step 210, and sets the association type as the Accessed type for existing contents in step 206.

Next, in step 212, the service agent module 162 receives a unique identifier (ContentId) for the initially created contents or the existing contents from the contents manager module 168. After that, in step 214, the service agent module 162 sets the content identifier (ContentId) to the place tag (PlaceTag).

After that, in step 216, the service agent module 162 receives semantic location information from the semantic location provider module 164 and sets a place identifier (PlaceId) to the place tag (PlaceTag). The semantic location provider module 164 directly recognizes a semantic location corresponding to a current place and provides the semantic location to the service agent module 162, or reads out place information stored in a place DB 172, and provides the place information to the service agent module 162.

Next, in step 218, the service agent module 162 sets a current time (Timestamp) value to the place tag (PlaceTag).

After that, in step 220, the service agent module 162 stores, in a place tag DB 174, the place tag (PlaceTag) to which the content identifier (ContentId), the association type (AssocType), the place identifier (PlaceId), and the current time (Timestamp) are set.

Next, the service agent module 162 terminates the procedure in FIG. 2 according to the exemplary embodiment of the present invention.

FIG. 3 is a flowchart illustrating a procedure for realizing manual semantic location tagging according to the exemplary embodiment of the present invention.

Referring to FIGS. 1 and 3, in step 300, a service agent module 162 judges if a content tagging request is generated manually by a user or a location-aware application. That is, the service agent module 162 judges if a content tagging request is generated in which a specific semantic location and a specific association type are designated to contents. If not, the method loops back to step 300.

Otherwise, with a request detected, in step 302, the service agent module 162 creates a place tag (PlaceTag) for constructing tag information of one semantic location.

Next, in step 304, the service agent module 162 judges if the service agent module 162 is tagging new content. When the service agent module 162 judges in step 304 to be tagging new content, the service agent module 162 proceeds to step 306 and registers the new content to a contents manager module 168, and then the method proceeds to step 308. However, when the service agent module 162 judges in step 304 not to be tagging the new content, the service agent module 162 proceeds to step 308.

After that, in step 308, the service agent module 162 sets an association type (AssocType) as a Designated type to the place tag (PlaceTag) based on content tagging request information. That is, in case of a content tagging request in which an association type is designated, the service agent module 162 sets the association type (AssocType) as the Designated type.

Next, in step 310, the service agent module 162 receives a unique identifier (ContentId) for initially created contents or existing contents from the contents manager module 168, and sets the content identifier (ContentId) to the place tag (PlaceTag).

After that, in step 312, the service agent module 162 receives a place identifier (PlaceId) from a semantic location provider module 164, and sets the place identifier (PlaceId) to the place tag (PlaceTag) based on the content tagging request information. The semantic location provider module 164 can directly recognize a semantic location corresponding to a current place and provide the semantic location to the service agent module 162, or can read out place information stored in the place DB 172 and provide the place information to the service agent module 162.

Next, in step 314, the service agent module 162 sets a current time (Timestamp) value to the place tag (PlaceTag).

After that, in step 316, the service agent module 162 stores, in a place tag DB 174, the place tag (PlaceTag) to which the content identifier (ContentId), the association type (AssocType), the place identifier (PlaceId), and the current time (Timestamp) are set.

Next, the service agent module 162 terminates the procedure in FIG. 3 according to the exemplary embodiment of the present invention.

In FIG. 2 and FIG. 3, the aforementioned descriptions have been made in which the place tagging is performed in order of the association type (AssocType), the content identifier (ContentId), the place identifier (PlaceId), and the current time (Timestamp), but this is merely one example, and the place tagging can be performed in various orders depending on a choice by practitioners skilled in the art for implementing the present invention.

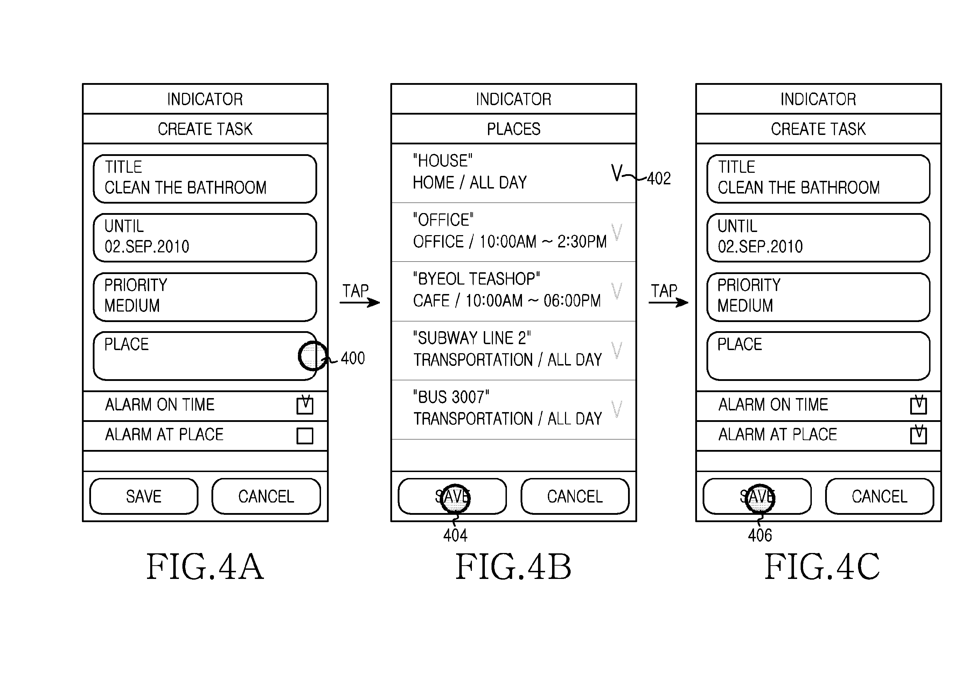

FIGS. 4A to 4C illustrate an example of designating a specific semantic location and a specific association type and requesting for tagging according to the exemplary embodiment of the present invention.

FIG. 4A illustrates a task content screen for scheduling task management. Here, task contents are composed of a 'Title' class, an 'Until' class, a 'Priority' class, a 'Place' class, an 'Alarm on time' check box, and an 'Alarm at place' check box. When a user selects the 'Place' class among these task contents, the screen of FIG. 4A can be switched to a screen of FIG. 4B. For example, as shown in FIG. 4A, the user selection by a tap input, as indicated by the dark circle 400 overlapping the 'Place" class, is detected on the touch screen 112 showing the screen in FIG. 4A, which prompts the control unit 100 to change the touch screen 112 to display the screen in FIG. 4B. The screen of FIG. 4B lists and shows semantic places that are in the place DB 172. According to alternative embodiments, the present invention can recognize a current location using the task content displayed on the touch screen 112 in various screens, as shown in FIGS. 4A-4C, for example, the task of 'Clean the Bathroom' may be associated with a bathroom, which is recognized as the current location, and the present invention will list and show only places around the current location.

Referring to FIG. 4B, the user selects "house" in the 'Place' class 402 and saves "house" by pressing or tapping the Save icon or button, as shown by the dark circle 404 overlapping the Save icon or button on the screen of FIG. 4B, and then the screen of FIG. 4B is switched to a screen as shown in FIG. 4C. The screen of FIG. 4C illustrates a final state in which the task content is set. The user can perform additional functions on the touch screen 112 showing the screen in FIG. 4C, for example, by setting an alarm at the set place, and then by pressing or tapping the Save icon or button, as shown by the dark circle 406 overlapping the Save icon or button on the screen of FIG. 4C.

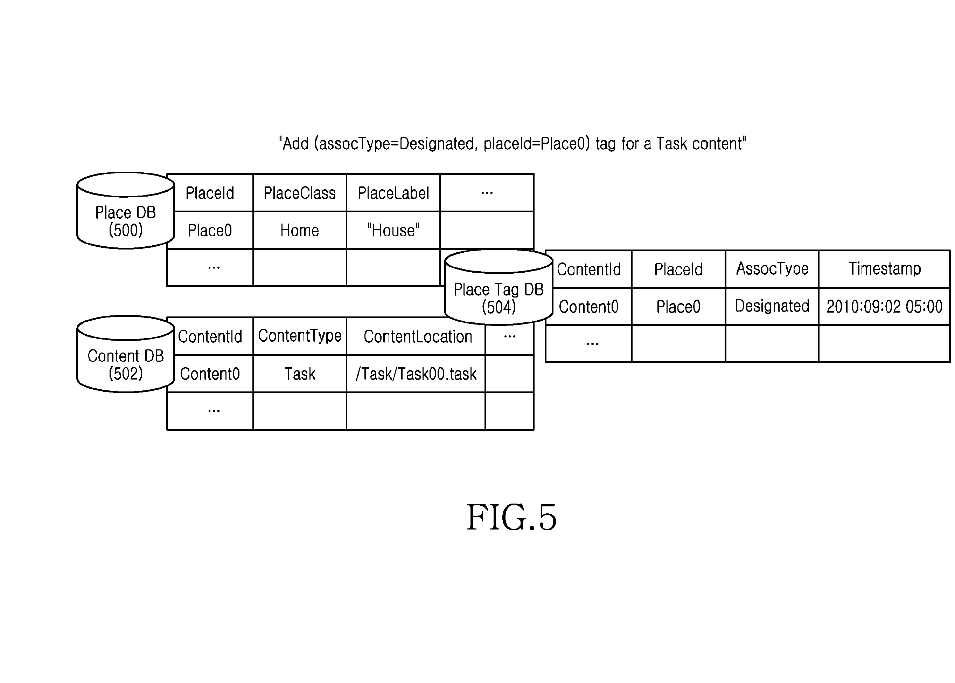

An example of creation of a place tag DB 174 dependent on task contents in FIGS. 4A-4C is shown in FIG. 5, as described below.

FIG. 5 illustrates an example of creating a place tag DB 174 according to task contents according to the exemplary embodiment of the present invention.

Referring to FIG. 5, when a command "Add (AssocType=Designated, placeId=Place0) tag for a Task content" is forwarded by the CPU 104 to the service agent module 162, a place tag for a task content is created in the place tag DB 174 according to the procedure of FIG. 3 of the present invention.

For instance, if the 'Place' class is set in the task content screen shown in FIGS. 4A-4C, a place identifier (PlaceID), a place class (PlaceClass), a place label (PlaceLabel) and the like are stored as 'Place0' 'Home', and "house" in the place DB 500, respectively, and a content identifier (ContentID), a content type (ContentType), a content location (ContentLocation) and the like are stored as 'Content0', 'Task', and '/Task/Task00.task' in the contents DB 502, respectively. In addition, a content identifier (ContentId), a place identifier (PlaceId), an association type (AssocType), a current time (Timestamp) and the like are set as 'Content0', 'Place0', 'Designated', and '2010:09:02 05:00' in the place tag DB 504, respectively. The place DB 500, the contents DB 502, and the place tag DB 504 of FIG. 5 may be included in or identical to the place DB 172, the contents DB 176, and the place tag DB 174, respectively, of FIG. 1.

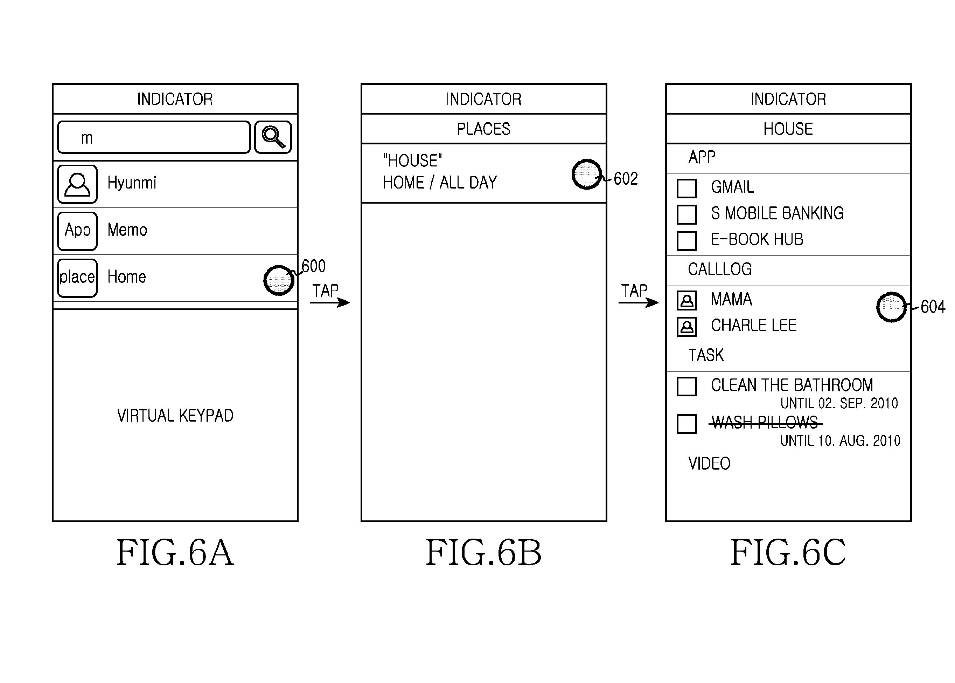

FIGS. 6A to 6C illustrate an example of searching contents using a keyword that is a semantic location according to the exemplary embodiment of the present invention.

Referring to FIGS. 6A-6C, a semantic location tag can be used even for a contents search or browsing. Because a semantic location can be tagged to various types of contents stored in and/or accessed by the portable electronic device, and if a place name well known to a user is used as a keyword, the user can easily search and browse his/her desired contents irrespective of types.

FIG. 6A illustrates an example screen in which, when 'm' is input into a search window near the top of the screen displayed by the touch screen 112, a 'Hyunmi' class, a 'Memo' class, and a 'Home' class are searched and displayed on the screen, since each of the words 'Hyunmi', 'Memo', and 'Home', identifying the corresponding classes, include the letter 'm' which was input. The 'Hyunmi' class is a person's name that is in an address list stored in the memory 150, the 'Memo' class is an application performing a memo function among applications of the portable electronic device, and the 'Home' class is a label of a semantic location related to a house or residence among place tags stored in the place tag DB 174. Appropriate icons such as a person icon displaying a generic person image or actual image of the person, an icon displaying the word 'App', and an icon displaying the word 'place' maybe displayed substantially adjacent the class identifiers 'Hyunmi', 'Memo', and 'Home', respectively, as shown in FIG. 6A, to identify the class, such as being a person, an application, a place, etc.

Here, when the 'Home' class is selected among the place tags stored in the place tag DB 174, for example, by pressing or tapping the touch screen 112, as indicated by the dark circle 600 overlapping the 'Home' class in the screen shown in FIG. 6A, the screen shown in FIG. 6A is switched to the screen shown in FIG. 6B. The screen of FIG. 6B shows a "house" in the 'Home' class among the place tags stored in the place tag DB 174.

When the "house" is selected in the 'Home' class in the screen of FIG. 6B, for example, by pressing or tapping the touch screen 112, as indicated by the dark circle 602 overlapping the screen portion labeled 'house', the screen shown in FIG. 6B is switched to the screen shown in FIG. 6C. The screen of FIG. 6C shows information about all contents having been created or used in the "house".

For example, FIG. 6C illustrates that, among applications, 'Gmail', 'mobile Banking', and 'E-Book Hub' applications were run in the "house", and illustrates that a user made a phone call with people or entities such as someone named or nicknamed 'Mama' and also 'Charle Lee' in the "house", and illustrates 'Clean the bathroom' as a task content to be done or 'Wash pillows' as a task content done in the "house". The user can perform additional functions on the touch screen 112 showing the screen in FIG. 6C, for example, by accessing the call log by pressing or tapping the screen region labeled 'Calllog', as shown by the dark circle 604 overlapping the call log region on the screen of FIG. 6C.

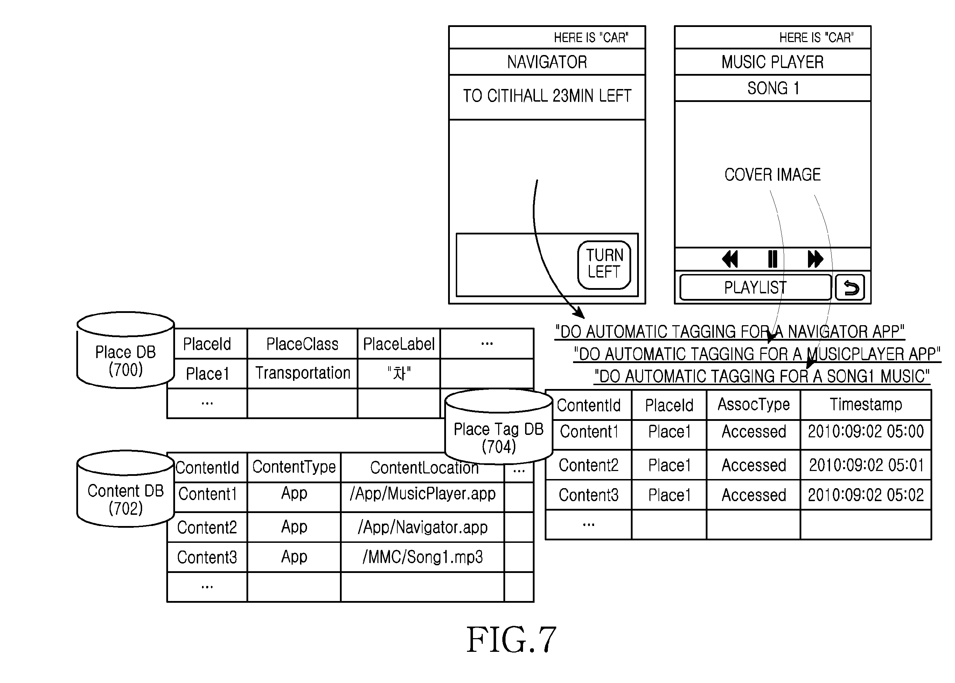

FIG. 7 illustrates a scenario of requesting automatic tagging according to the exemplary embodiment of the present invention.

Referring to FIG. 7, when a command "Do automatic tagging for X", in which 'X' is a navigator app, a musicplayer app, a music file such as a Song1, etc., is forwarded by the CPU 104 to the service agent module 162, a place tag for a task content is created in the place tag DB 704 according to the procedure of FIG. 2 of the present invention, which may be associated with a place DB 700 and a contents DB 702. So, place tagging can be automatically carried out for all contents that a user uses in a portable electronic device. The effect is to be able to tag contents with a semantic location set from the user's perspective without a user's manual task or input. If the user has registered his/her own private car under "car" as a Place class in the Place DB 700 and, in a situation in which a current semantic location is recognized as the "car", he/she has listened to music in the Contents DB 702 with a music player and has used a navigator, as shown in FIG. 7, he/she can configure data by automatically tagging the semantic location "car" to a music file that is music type contents, and to the music player and to a navigator that are application type contents. As shown in FIG. 7, the place DB 700, the contents DB 702, and the place tag DB 704 of FIG. 7 may be included in or identical to the place DB 172, the contents DB 176, and the place tag DB 174, respectively, of FIG. 1.

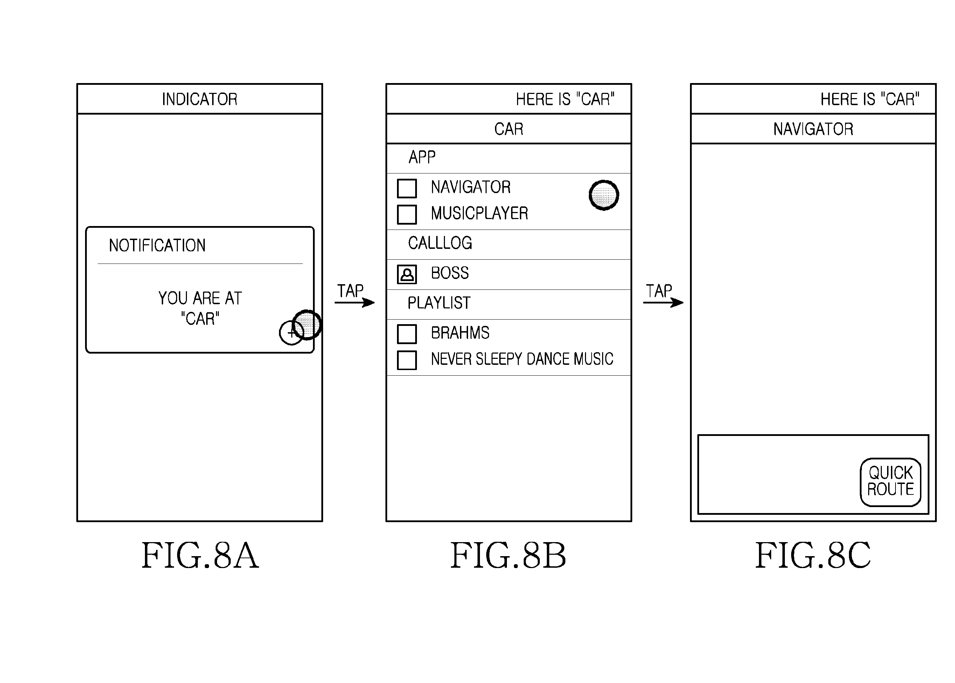

FIGS. 8A to 8C illustrate a scenario of a location-based contents recommendation service based on user information according to the exemplary embodiment of the present invention.

The location-based contents recommendation service can provide a personalized application service based on contents manually or automatically tagged with a semantic location. This is because a semantic location and a tagging time for contents are stored together. The location-based contents recommendation service can analyze the number of place tagging for contents and contents tagged at a specific time zone, using the tagging time.

For example, when a user's semantic location is recognized as a "car", the location-based contents recommendation service can recommend frequently used contents based on the number of associations of a tag having the "car" as the semantic location, or use the frequently used contents as a sort order.

FIG. 8A shows a screen of the touch screen 112, in which a user's semantic location is recognized as "car", and in response to the user tapping the plus sign + in the Notification window, represented by the dark circle over the plus sign + on the screen in FIG. 8A, the location-based contents recommendation service analyzes the number of places tagging for contents and contents tagged at a specific time zone, to show a list that a user has ever used in the "car", with the list displayed in the screen of FIG. 8B.

The screen in FIG. 8B shows a navigator and a music player as applications or apps that the user used in the "car", a call log indicating that the user made a phone call with someone designated 'boss' in the "car", and a playlist of music that the user has ever listened to in the "car". Here, if the user selects the navigator by tapping the navigator screen region, represented by the dark circle over the navigator screen region in FIG. 8B, the navigator application is executed as shown in the screen in FIG. 8C.

Also, the location-based contents recommendation service can recommend 'Brahms' tagged to a proximity time at office hour 07:00 and 'Never sleepy dance music' tagged to a proximity time at closing hour 21:00, among the 'Playlist' contents having the "car" as the semantic location.

Another exemplary embodiment of the present invention can provide more plentiful services using a Place class that is category information of a semantic location. For instance, in a situation in which a current place is recognized as 'Byeol teashop', such an exemplary embodiment has the portable electronic device search and recommend contents place-tagged with other semantic locations of 'Kong teashop' and 'CoffeeKong', which have, as a Place class, 'Cafe' that is a Place class of the 'Byeol teashop'. Semantic locations set as the same Place class by a user can be judged to have a similar place environment and a similar user intention from a user's perspective. The effect is that such user information can be used for contents management. In addition, even a method using the conceptual hierarchical relationship between Place classes can be provided. For example, the 'Cafe' class may be a subordinate concept of a 'Shop' class. Accordingly, the present invention can not only find contents corresponding to the 'Shop' class, but also may search contents corresponding to all places of the 'Shop' class and any subordinate class thereof.

Various additional exemplary embodiments of the present invention are described herein. According to a first additional exemplary embodiment shown in FIGS. 1-8, the present invention includes a content tagging method of an electronic device, with the method comprising: displaying at least one or more semantic locations as in FIGS. 4A-4C; selecting one of the at least one or more semantic locations as in FIG. 4A; and based on the selected semantic location, creating a place tag as in steps 202 and 302 of FIGS. 2-3, respectively, related to a corresponding content as in FIG. 5. Creating the place tag related to the corresponding content comprises: determining an association type; determining content identification information; determining identification information about a current semantic location; determining current time information; and tagging the place tag with at least one or more of the association type, the content identification information, the identification information about the current semantic location, and the current time information, as shown in FIG. 5, and the association type defines whether an association is a new content creation, is an access to existing contents, or is designated by a user.

The identification information about the current semantic location of the place tag does not comprise a latitude/longitude coordinate value about a place or an address value. The content is one of multimedia data newly created or previously stored within the electronic device, and data related to one of a plurality of software modules executed within the electronic device. The identification information about the current semantic location is stored in a database as a place identifier, a place class, and a place name, and the content identification information is stored in a database as one of a contents identifier, a content type, and a content access path, as shown in FIG. 7. The semantic location is a location of a user's perspective selected by a user, and the semantic location is a location corresponding an indoor location, an outdoor location, or a moving car location.

According to a second additional exemplary embodiment shown in FIGS. 1-8, the present invention includes a content tagging using method of an electronic device, with the method comprising: searching a place tag DataBase (DB) 174 for place tags stored therein, and displaying at least one or more semantic locations; selecting one of the at least one or more semantic locations; and displaying at least one or more contents related to the selected semantic location. Each place tag comprises at least one of an association type, content identification information, identification information about the semantic location, and time information as shown in FIG. 5, and the association type defines whether an association is new content creation, is an access to existing contents, or is designated by a user. The identification information about the current semantic location of the place tag does not comprise a latitude/longitude coordinate value about a place or an address value. The content is one of multimedia data newly created or previously stored within the electronic device, and data related to one of a plurality of software modules executed within the electronic device.

According to a third additional exemplary embodiment shown in FIGS. 1-8, the present invention includes a content tagging using method of an electronic device, with the method comprising: recognizing a semantic location of a user's perspective corresponding to a current place; and displaying at least one or more contents related to the semantic location corresponding to the current place. The semantic location includes a place tag which comprises at least one of an association type, content identification information, identification information about the semantic location, and time information, as shown in FIG. 5, and the association type defines whether an association is new content creation, is an access to existing contents, or is designated by a user. The identification information about the current semantic location of the place tag does not comprise a latitude/longitude coordinate value about a place or an address value. The content is one of multimedia data newly created or previously stored within the electronic device and data related to one of a plurality of software modules executed within the electronic device. The at least one or more contents are arranged based on at least one or more of the number of tagging for contents and tagged time.

According to a fourth additional exemplary embodiment shown in FIGS. 1-8, the present invention includes a content tagging method of an electronic device, with the method comprising: requesting for content tagging; according to the content tagging request, determining at least one or more of an association type, a contents identifier, a place identifier, and a current time, as shown in FIG. 5; and creating a place tag as in steps 202 and 302 of FIGS. 2-3, respectively, comprising the determined at least one or more of the association type, the contents identifier, the place identifier, and the current time. The association type is determined depending on whether an association is new content creation, is an access to existing contents, or is designated by a user. The content is one of multimedia data newly created or previously stored within the electronic device and data related to one of a plurality of software modules executed within the electronic device.

According to a fifth additional exemplary embodiment shown in FIGS. 1-8, the present invention includes an electronic device comprising: one or more processors 100 for executing computer programs; a memory 150 for storing data and instructions; and one or more computer programs 152-168 stored in the memory 150 and configured to be executed by the one or more processors 100, with the one or more computer programs 152-168 comprising a command for: displaying at least one or more semantic locations as in FIGS. 4A-4C; selecting one of the at least one or more semantic locations as in FIG. 4A; and creating a place tag as in steps 202 and 302 of FIGS. 2-3, respectively, related to a corresponding content, based on the selected semantic location. The command for creating the place tag related to the corresponding content comprises a command for: determining an association type; determining content identification information; determining identification information about a current semantic location; determining current time information; and tagging the place tag with at least one or more of the association type, the content identification information, the identification information about the current semantic location, and the current time information, as shown in FIG. 5, and the association type defines whether an association is new content creation, is an access to existing contents, or is designated by a user.

The identification information about the semantic location of the place tag does not comprise a latitude/longitude coordinate value about a place or an address value. The content is one of multimedia data newly created or previously stored within the electronic device and data related to one of the one or more computer programs executed within the electronic device. The identification information about the semantic location is stored in a database in the memory 150 as a place identifier, a place class, and a place name, and the content identification information is stored in the database in the memory 150 as a contents identifier, a content type, and a content access path as shown in FIG. 7. The semantic location is a location of a user's perspective selected by a user, and the semantic location is a location corresponding an indoor location, an outdoor location, or a moving car location.

According to a sixth additional exemplary embodiment shown in FIGS. 1-8, the present invention includes: an electronic device comprising: one or more processors 100 for executing computer programs; a memory 150 for storing data and instructions; and one or more computer programs 152-168 stored in the memory 150 and configured to be executed by the one or more processors 100, with the one or more computer programs comprising a command for: searching a place tag DataBase (DB) 174 of place tags, and displaying at least one or more semantic locations; selecting one of the at least one or more semantic locations; and displaying at least one or more contents related to the selected semantic location. Each place tag comprises at least one of an association type, content identification information, identification information about the semantic location, and time information as shown in FIG. 5, and the association type defines whether an association is new content creation, is an access to existing contents, or is designated by a user. The identification information about the semantic location of the place tag does not comprise a latitude/longitude coordinate value about a place or an address value. The content is one of multimedia data newly created or previously stored within the electronic device and data related to one of the one or more computer programs executed within the electronic device.

According to a seventh additional exemplary embodiment shown in FIGS. 1-8, the present invention includes: an electronic device comprising: one or more processors 100 for executing computer programs; a memory 150 for storing data and instructions; and one or more computer programs 152-168 stored in the memory 150 and configured to be executed by the one or more processors, with the one or more computer programs 152-168 comprising a command for: recognizing a semantic location corresponding to a current place; and displaying at least one or more contents related to the semantic location corresponding to the current place. The semantic location includes a place tag which comprises at least one of an association type, content identification information, identification information about the semantic location, and time information as shown in FIG. 5, and the association type defines whether an association is new content creation, is an access to existing contents, or is designated by a user. The identification information about the semantic location of the place tag does not comprise a latitude/longitude coordinate value about a place or an address value. The content is one of multimedia data newly created or previously stored within the electronic device and data related to one of the one or more computer programs executed within the electronic device. The at least one or more contents are arranged based on at least one or more of the number of tagging for contents and tagged time.

According to an eighth additional exemplary embodiment shown in FIGS. 1-8, the present invention includes: an electronic device comprising: one or more processors 100 for executing computer programs; a memory 150 for storing data and instructions; and one or more computer programs 152-168 stored in the memory 150 and configured to be executed by the one or more processors 100, with the one or more computer programs 152-168 comprising a command for: requesting for content tagging; determining at least one or more of an association type, a contents identifier, a place identifier, and a current time, according to the content tagging request; and creating a place tag as in steps 202 and 302 of FIGS. 2-3, respectively, comprising the determined at least one or more of the association type, the contents identifier, the place identifier, and the current time as shown in FIG. 5. The association type is determined depending on whether an association is new content creation, is an access to existing contents, or is designated by a user. The content is one of multimedia data newly created or previously stored within the electronic device and data related to one of the one or more computer programs executed within the electronic device.

As described herein the methods according to the exemplary embodiments disclosed in the claims and/or the specification of the present invention can be implemented in a form of hardware, software, or a combination of hardware and software.

In case of implementing in software, a computer readable storage medium storing one or more programs, for example, software modules, can be provided. One or more programs stored in the computer readable storage medium are configured to be executable by one or more processors within an electronic device. One or more programs include instructions for enabling the electronic device to execute the methods according to the exemplary embodiments disclosed in the claims and/or the specification of the present invention.

These programs, for example, software modules or software, can be stored in a RAM, a nonvolatile memory including a flash memory, a ROM, an EEPROM, a magnetic disk storage device, a CD-ROM, a DVD or an optical storage device of other form, and a magnetic cassette. Or, they can be stored in a memory configured by a combination of some or all of them. Also, each configuration memory may be included in plural.

Further, the programs can be stored in an attachable storage device accessible to an electronic device through a communication network such as the Internet, an intranet, a LAN, a WLAN, or a SAN, or a communication network configured by a combination of them. This storage device can access the electronic device through an external port.

Furthermore, a separate storage device on a communication network may access the portable electronic device.

As described above, because a semantic location is information recognized and sorted by a user, the present invention can use place information of a user's perspective for contents management. Because the semantic location is expressed as a name recognized by the user, the present invention can facilitate place tagging for contents, and can provide application services such as contents browsing based on a place tag having a semantic location and search or location-based contents recommendation.

The above-described apparatus and methods according to the present invention can be implemented in hardware, firmware or as software or computer code that can be stored in a non-transitory recording medium such as a CD ROM, a RAM, a ROM, a floppy disk, DVDs, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods described herein can be rendered in such software that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any media such as communication signals transmitted by wire/wireless connections, and their equivalents.

While the invention has been shown and described with reference to certain preferred embodiments thereof, it will be understood by those skilled in the art that various changes in form and details may be made therein without departing from the spirit and scope of the invention as defined by the appended claims.

## Claims

1. A content tagging method of an electronic device, the method comprising:
displaying at least one or more semantic locations;
selecting one of the at least one or more semantic locations; and
based on the selected semantic location, creating a place tag related to a corresponding content.

2. The method of claim 1, wherein creating the place tag related to the corresponding content comprises:
determining an association type;
determining content identification information;
determining identification information about a current semantic location;
determining current time information; and
tagging the place tag with at least one or more of the association type, the content identification information, the identification information about the current semantic location, and the current time information, and
wherein the association type defines whether an association is a new content creation, is an access to existing contents, or is designated by a user.

3. The method of claim 2, wherein the identification information about the current semantic location of the place tag does not comprise a latitude/longitude coordinate value about a place or an address value,
wherein the identification information about the current semantic location is stored in a database as a place identifier, a place class, and a place name, and
wherein the content identification information is stored in a database as one of a contents identifier, a content type, and a content access path.

4. The method of claim 3, wherein the semantic location is a location of a user's perspective selected by a user, and
the semantic location is a location corresponding an indoor location, an outdoor location, or a moving car location.

5. A content tagging using method of an electronic device, the method comprising:
searching a place tag DataBase (DB) for place tags stored therein, and displaying at least one or more semantic locations;
selecting one of the at least one or more semantic locations; and
displaying at least one or more contents related to the selected semantic location.

6. The method of claim 5, wherein each place tag comprises at least one of an association type, content identification information, identification information about the semantic location, and time information,
wherein the association type defines whether an association is new content creation, is an access to existing contents, or is designated by a user, and
wherein the identification information about the current semantic location of the place tag does not comprise a latitude/longitude coordinate value about a place or an address value.

7. A content tagging using method of an electronic device, the method comprising:
recognizing a semantic location of a user's perspective corresponding to a current place; and
displaying at least one or more contents related to the semantic location corresponding to the current place.

8. The method of claim 7, wherein the semantic location includes a place tag which comprises at least one of an association type, content identification information, identification information about the semantic location, and time information,
wherein the association type defines whether an association is new content creation, is an access to existing contents, or is designated by a user, and
wherein the identification information about the current semantic location of the place tag does not comprise a latitude/longitude coordinate value about a place or an address value.

9. The method of claim 7, wherein the at least one or more contents are arranged based on at least one or more of the number of tagging for contents and tagged time.

10. A content tagging method of an electronic device, the method comprising:
requesting for content tagging;
according to the content tagging request, determining at least one or more of an association type, a contents identifier, a place identifier, and a current time; and
creating a place tag comprising the determined at least one or more of the association type, the contents identifier, the place identifier, and the current time,
wherein the association type is determined depending on whether an association is new content creation, is an access to existing contents, or is designated by a user, and

11. The method of claims 1, 5, 7 or 10, wherein the content is one of multimedia data newly created or previously stored within the electronic device and data related to one of a plurality of software modules executed within the electronic device.

12. An electronic device, comprising:
a touch screen display displaying a plurality of user interface objects;
one or more processors;
memory; and
one or more programs, wherein the one or more programs are stored in the memory and configured to cause, when executed by the electronic device, the electronic device to perform the method of any of claims 1 to 4.

13. An electronic device, comprising:
a touch screen display displaying a plurality of user interface objects;
one or more processors;
memory; and
one or more programs, wherein the one or more programs are stored in the memory and configured to cause, when executed by the electronic device, the electronic device to perform the method of any of claims 5 to 6.

14. An electronic device, comprising:
a touch screen display displaying a plurality of user interface objects;
one or more processors;
memory; and
one or more programs, wherein the one or more programs are stored in the memory and configured to cause, when executed by the electronic device, the electronic device to perform the method of any of claims 7 to 9.

15. An electronic device, comprising:
a touch screen display displaying a plurality of user interface objects;
one or more processors;
memory; and
one or more programs, wherein the one or more programs are stored in the memory and configured to cause, when executed by the electronic device, the electronic device to perform the method of any of claims 10 to 11.
